# EUROPEAN PATENT APPLICATION

(11) **EP 4 851 104 A1**
(43) Date of publication of application: **09.12.2026**
(21) Application number: 25180177.5
(22) Date of filing: 02.06.2025
(51) Int. Cl.: C01B 3/00, F17C 11/00

(54) **AUTOMATIC REGENERATION SETUP FOR METAL HYDRIDE-BASED STORAGE AND COMPRESSION SYSTEMS AND METHOD FOR REGENERATION OF A METAL HYDRIDE-BASED STORAGE AND COMPRESSION SYSTEM**

(71) Applicant: Hyundai Motor Company, Seoul 06797 (KR); Kia Corporation, Seoul 06797 (KR); GRZ Technologies SA, 1580 Avenches (CH)
(72) Inventor: PARK, Jihye, 18280 Hwaseong-si, Gyeonggi-do (KR); KIM, Pyung Soon, 18280 Hwaseong-si, Gyeonggi-do (KR); JANG, Ji-Hoon, 18280 Hwaseong-si, Gyeonggi-do (KR); LEE, Jaeyong, 18280 Hwaseong-si, Gyeonggi-do (KR); SEO, Jihui, 18280 Hwaseong-si, Gyeonggi-do (KR); YOON, Narae, 18280 Hwaseong-si, Gyeonggi-do (KR); KIM, Hanjin, 18280 Hwaseong-si, Gyeonggi-do (KR); PATEL, Bhargav, 1700 Fribourg (CH); SUN, Tai, 3177 Laupen (CH); LI, Rui, 1563 Dompierre (CH); ADLER, Ernst, 3177 Laupen (CH); GALLANDAT, Noris, 1716 Schwarzsee (CH)
(74) Representative: Isarpatent

(57) **Abstract**

The present invention relates to an automatic regeneration setup for metal hydride-based storage and compression systems comprising: at least one unit including a hydrogen storage material, at least one thermal management system configured to act as a heating source and/or to act as a cooling source for at least a part of the at least one unit including a hydrogen storage material, a depressurizing system connected to the at least one unit including a hydrogen storage material configured to act as depressurizing source and to depressurize the at least one unit including a hydrogen storage material. Further, the present invention relates to a method for regeneration of a metal hydride-based storage and compression system, the method comprising the steps of: depressurizing at least one unit including a hydrogen storage material using a depressurizing system, heating the at least one unit including a hydrogen storage material using a first thermal management system, cooling the at least one unit including a hydrogen storage material using a second thermal management system.

## Description

### TECHNICAL FIELD OF THE INVENTION

The present invention relates to an automatic regeneration setup for metal hydride-based storage and compression systems and a method for regeneration of a metal hydride-based storage and compression system.

### TECHNICAL BACKGROUND

Hydrogen is a key element in the decarbonization of mobility and industrial processes. Several serial vehicles including trucks, buses, and passenger cars running on hydrogen have now been commercialized. However, one bottleneck for the widespread use of hydrogen as a fuel is the development of an effective, safe, and affordable infrastructure, including production, storage, compression, and distribution units.

Züttel *et al.* published that metal hydrides show high storage densities of up to 150 kg_{H2}/m³ (A. Züttel, Materials for hydrogen storage, Materials Today, 2003, 6, pp. 24-33, https://doi.org/10.1016/S1369-7021(03)00922-2). They can store large amounts of hydrogen at low temperatures and then release hydrogen at different temperatures with different pressures. The whole process is thermally driven and is a promising method to compress hydrogen from low pressure to practically unlimited discharge pressure (Tarasov BP, Bocharnikov MS, Yanenko YB, Fursikov PV, Minko KB, Lototskyy MV, Metal hydride hydrogen compressors for energy storage systems: layout features and results of long-term tests, Journal of Physics: Energy, 2020, 2, 024005. https://doi.org/10.1088/2515-7655/ab6465). The compression device designed based on metal hydrides has no movable parts and is thus quiet and does not require replacement of parts during its whole service life.

Since operation of such metal hydride-based storage and compression systems takes place in a cyclical manner - absorption, storage, compression, desorption - the system lifetime depends on the number of cycles that the compressor can undergo without suffering a substantial degradation. Over a large number of cycles, the metal hydride-based material used for the storage and compression of hydrogen tends to show some amount of capacity loss. The capacity loss itself can be due to several reasons such as a disproportionation reaction that causes degradation of the metal hydride-based material itself or poisoning of the metal hydride-based material due to impurities in hydrogen (Tarasov BP, Bocharnikov MS, Yanenko YB, Fursikov PV, Lototskyy MV, Cycling stability of RNi5 (R = La, La+Ce) hydrides during the operation of metal hydride hydrogen compressor, Int J Hydrog Energy, 2018, 43, pp. 4415-27. https://doi.org/10.1016/j.ijhydene.2018.01.086 and Wanner M, Friedlmeier G, Hoffmann G, Groll M, Thermodynamic and structural changes of various intermetallic compounds during extended cycling in closed systems, J Alloys Compd, 1997, 253-254, pp. 692-7. https://doi.org/10.1016/S0925-8388(96)03041-1).

Impurities typically found in hydrogen gas stemming from different hydrogen production processes can include O₂, H₂O, CO, CO₂, N₂, NH₃ and hydrocarbons.

Friedlmeier *et al.* (G. Friedelmeier, A. Manthey, M. Wanner, M. Groll, Cyclic stability of various application-relevant metal hydrides, Journal of alloys and compounds, 1995, 231, pp. 880-887, https://doi.org/10.1016/0925-8388(95)01776-3) shows that the regeneration of a hydrogen storage material can be carried out at a temperature of 380-530°C at a pressure of 1 Pa.

However, an adequate regeneration device is not presented and the whole process needs to be controlled manually.

For manufactured metal hydride-based storage and compression systems, this method for regeneration must be conducted within the manufactured system.

EP 2 199 256 A1 presents a method of activating or regenerating a hydrogen storage material. The metal hydrides were brought into contact with an inert solvent which is subsequently removed again in order to regenerate the metal hydrides. This method is not direct and is relatively complicated to operate.

### SUMMARY OF THE INVENTION

In order to overcome the described problems, the present invention provides an effective automatic regeneration setup for conducting an auto-regeneration method for the restoration of the capacity of metal hydride-based hydrogen storage and compression systems and a method for regeneration of such a system.

The method can be conducted within already manufactured metal hydride-based storage and compression systems and the systems do not have to be disassembled. The method does not require additional components such as a solvent, which is difficult to remove completely from the system.

Further, the metal hydride-based hydrogen storage and compression systems can be easily and effectively regenerated.

Furthermore, the regeneration method can be performed automatically without the need of manual starting. Besides, by setting the criteria for when regeneration is required in advance, this method can maximize the convenience of maintenance by automatically operating the regeneration mode when the performance of the metal hydride-based storage and compression system deteriorates.

In addition, the regeneration method is safe, reliable and repeatable with minimal effort.

An aspect of the invention relates to an automatic regeneration setup for metal hydride-based storage and compression systems comprising: at least one unit including a hydrogen storage material, at least one thermal management system configured to act as a heating source and/or to act as a cooling source for at least a part of the at least one unit including a hydrogen storage material, a depressurizing system connected to the at least one unit including a hydrogen storage material configured to act as depressurizing source and to depressurize the at least one unit including a hydrogen storage material, as shown in claim 1 as appended.

Another aspect relates to a method for regeneration of a metal hydride-based storage and compression system, the method comprising the steps of: depressurizing at least one unit including a hydrogen storage material using a depressurizing system, heating the at least one unit including a hydrogen storage material using a first thermal management system, cooling the at least one unit including a hydrogen storage material using a second thermal management system., as shown in claim 10 as appended.

Further aspects and embodiments of the invention are disclosed in the dependent claims and can be taken from the following description, figures and examples, without being limited thereto.

### BRIEF SUMMARY OF THE DRAWINGS

The present invention is explained in more detail below with reference to the embodiments shown in the schematic figures:
- Fig. 1: shows an exemplary illustration of a hydrogen storage cycle using at least one unit including a hydrogen storage material.
- Fig. 2: exemplarily shows the effect of the method for regeneration on the total capacity of the unit including a hydrogen storage material.
- Fig. 3: shows an exemplary embodiment of the automatic regeneration setup for metal hydride-based storage and compression systems according to the invention.

In the figures of the drawing, elements, features and components which are identical, functionally identical and of identical action are denoted in each case by the same reference sings unless stated otherwise.

### DESCRIPTION OF EXEMPLARY EMBODIMENTS

### Definitions

Unless defined otherwise, technical and scientific terms used herein have the same meaning as commonly understood by one of ordinary skill in the art to which this invention belongs.

Before the invention is described in exemplary detail, it is to be understood that this invention is not limited to the particular component parts of the process steps of the methods described herein as such methods may vary. It is also to be understood that the terminology used herein is for purposes of describing particular embodiments only, and is not intended to be limiting. It must be noted that, as used in the specification and the appended claims, the singular forms "a", "an" and "the" include singular and/or plural indications unless the context clearly dictates otherwise. For example, the term "a" as used herein can be understood as one single unit or in the meaning of "one or more" units. It is also to be understood that plural forms include singular and/or plural indications unless the context clearly dictates otherwise.

As used herein, the terms "comprises", "comprising", "contains", "containing", "includes", "including", "has", "having" or any other variation thereof, are intended to cover a non-exclusive inclusion. For example, a process, method, article, device, setup, or apparatus that comprises a list of elements is not necessarily limited to only those elements, but may include other elements not expressly listed or inherent to such process, method, article, device, setup or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The use of the term "at least one" or "one or more" will be understood to include one as well as any quantity more than one. In addition, the use of the phrase "at least one of X, Y, and Z" will be understood to include X alone, Y alone, and Z alone, as well as any combination of X, Y, and Z.

The use of ordinal number terminology (i.e., "first", "second", "third", "fourth", etc.) is solely for the purpose of differentiating between two or more items and, unless explicitly stated otherwise, is not meant to imply any sequence or order or importance to one item over another or any order of addition.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

As used herein, the term controller/control system refers to a hardware device that includes a memory and a processor and is specifically programmed to execute the processes described herein. The memory is configured to store the modules, for example a software, and the processor is specifically configured to execute said modules to perform one or more processes which are described further below.

Further, the control logic may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

As used herein, the term vacuum lower than the atmospheric pressure can be expressed as rough/low vacuum ranging from 1 bar to 1 mbar, fine/medium vacuum ranging from 1 mbar to 10⁻³ mbar, and high vacuum ranging from 10⁻³ mbar to 10⁻⁷ mbar.

As used herein, the term room temperature is a temperature in a range from 18 °C to 30 °C, preferably from 20 to 25 °C, more preferably 23 °C.

As used herein, the term normal pressure refers to a pressure of 1 bar to 1.1 bar, preferably 1 bar.

As used herein, the term thermal oil (also called heat transfer oil) is an oil used for heat transfer. Thermal oil is very suitable for heating and/or cooling to high and/or cool temperatures. Thermal oil includes mineral and/or synthetic oil. Synthetic oil can include synthetic aromatic oil. Mineral oil can be paraffinic or naphthenic. The most important property of the thermal oil is the safe transfer of heat.

As used herein, the term silicone oil is any liquid polymerized siloxane with organic side groups and/or halogen side groups. Silicone oil can be characterized by the periodically alternating arrangement of silicon and oxygen atoms with the general molecular formula [R₁R₂SiO]ₙ (R₁, R₂ can be an organic side group and/or halogen side group).

As used herein, the term hydrogen storage material is a material capable of storing hydrogen and releasing hydrogen. Hydrogen storage materials are divided into three groups: (i) dissociative materials in which molecular hydrogen is dissociated into hydrogen atoms, which occupy interstitial sites; (ii) materials with chemically bound hydrogen; and (iii) materials that adsorb molecular hydrogen, wherein molecular hydrogen is attached to the surface by weak interactions such as van der Waals force or physisorption.

In the case of a metal hydride-based storage and compression system, the hydrogen storage material is a material forming a metal hydride in the presence of hydrogen under general known conditions in this field.

As used herein, the term metal hydride is a material, in which hydrogen is chemically bound to metals or metal alloys. It is a hydrogen storage material including chemically bound hydrogen (see group ii) above).

As used herein, the term hydrogen storage cycle is a process that includes a hydrogen absorption process and a hydrogen desorption process.

The metal hydride is formed during a hydrogen absorption process as follows: Dissociating of hydrogen when reaching the metal surface or metal alloy surface of the hydrogen storage material, diffusing into the metal lattice or metal alloy lattice, and reacting to form a metal hydride.

During a hydrogen desorption process the metal hydride releases hydrogen, wherein two hydrogen atoms are recombined to form hydrogen (H₂).

The hydrogen absorption process in the hydrogen storage material is typically exothermic (producing heat) whereas the hydrogen desorption process is conversely endothermic (absorbing heat).

In a first aspect, an automatic regeneration setup for metal hydride-based storage and compression systems is provided, comprising: at least one unit including a hydrogen storage material, at least one thermal management system configured to act as a heating source and/or to act as a cooling source for at least a part of the at least one unit including a hydrogen storage material, a depressurizing system connected to the at least one unit including a hydrogen storage material configured to act as depressurizing source and to depressurize the at least one unit including a hydrogen storage material.

Using such an automatic regeneration set up simplifies the regeneration of a metal hydride-based storage and compression system, wherein an automatic, safe, reliable and repeatable regeneration of a metal hydride-based storage and compression system can be performed.

Furthermore, such a set up reduces the temperature for regeneration and no solvent is used. The removal of a solvent used for regeneration that is fed into the units is complex and it is difficult to remove the solvent without any residue.

Furthermore, this setup can be applied to existing metal hydride-based storage and compression systems, as only a depressurizing system needs to be added. A thermal management system, at least one unit including a hydrogen storage material, as well as parts, which can be part of a depressurizing system according to the present invention, and a control system, which are described below, are available in existing metal hydride-based storage and compression systems, and can be used for such an automatic regeneration setup. This means that the automatic regeneration setup can be easily implemented.

According to certain embodiments, the at least one unit including a hydrogen storage material comprises a casing and the hydrogen storage material. In particular, the hydrogen storage material can be located in the casing. Further, the at least one unit including a hydrogen storage material can comprise at least one filter configured to prevent the hydrogen storage material to leave the at least one unit. The casing can comprise at least one inlet and at least one outlet configured to be connected to the depressurizing system.

According to certain embodiments, the automatic regeneration setup for metal hydride-based storage and compression systems comprises more than one unit including a hydrogen storage material. In this case, the depressurizing system can interconnect each unit including a hydrogen storage material. The interconnection between each unit including a hydrogen storage material can be implemented by at least one pipe and/or at least one valve comprised in the depressurizing system. According to certain embodiments, the units including a hydrogen storage material can be arranged as a stack in a housing of the regeneration-setup.

According to certain embodiments, the at least one unit including a hydrogen storage material can be at least one unit including a hydrogen storage material of an existing metal hydride-based storage and compression system.

According to certain embodiments, the capacity of the hydrogen storage material included in the at least one unit including a hydrogen storage material is not particularly limited. The total capacity of the hydrogen storage material included in the at least one unit including a hydrogen storage material can be up to 50 000 kg of hydrogen. According to certain embodiments, the hydrogen storage material included in the at least one unit including a hydrogen storage material has a total capacity of 0.2 kg of hydrogen to 1000 kg of hydrogen, preferably 5 kg of hydrogen to 720 kg of hydrogen, more preferably 15 kg of hydrogen to 250 kg of hydrogen, wherein the total capacity of hydrogen refers to the total amount of hydrogen (weight in kg) comprised in the hydrogen storage material included in the at least one unit. This means that if more than one unit including a hydrogen storage material is included in the automatic regeneration setup, the total capacity is the total capacity of the entire hydrogen storage material included in all units.

According to certain embodiments, a ratio of the total capacity of hydrogen by weight of the hydrogen storage material included in the at least one unit including a hydrogen storage material to the total amount by weight of the hydrogen storage material included in the at least one unit including a hydrogen storage material is 0.001 to 0.05 preferably 0.003 to 0.037, more preferably 0.005 to 0.02. For example, if the total capacity of hydrogen by weight of the hydrogen storage material included in the at least one unit including a hydrogen storage material is 1 kg and the total amount by weight of the hydrogen storage material included in the at least one unit including a hydrogen storage material is 100 kg, the above mentioned ratio is 0.01.

The at least one unit including a hydrogen storage material can comprise a total amount of the hydrogen storage material up to 5000 tons. According to certain embodiments the at least one unit including a hydrogen storage material comprises a total amount of 20 kg to 100 000 kg of the hydrogen storage material, preferably a total amount of 500 kg to 72 000 kg of the hydrogen storage material, more preferably a total amount of 1 500 kg to 25 000 kg of the hydrogen storage material. This means that if more than one unit including a hydrogen storage material is included in the automatic regeneration setup, the total amount of the hydrogen storage material included in the units is the total amount of the entire hydrogen storage material included in all units.

According to certain embodiments, the hydrogen storage material included in the at least one unit including a hydrogen material is the same as described with regard to the second aspect.

If the ratio and/or the total capacity and/or the total amount of the hydrogen storage material is in the above range, a regeneration process can be carried out particularly effectively.

According to certain embodiments, the at least one thermal management system configured to act as a heating source and/or to act as a cooling source is selected from the group consisting of a thermal medium management system configured to act as a heating source and/or to act as a cooling source, an electrical heat configured to act as a heating source, or a combination thereof.

According to certain embodiments, the at least one thermal management system is configured to act as a heating source and/or to act as a cooling source for at least a part of the at least one unit including a hydrogen storage material.

According to certain embodiments, the at least one thermal management system is configured to act as a heating source and/or to act as a cooling source for the at least one unit including a hydrogen storage material.

According to certain embodiments, the automatic regeneration setup for metal hydride-based storage and compression system can use a thermal management system configured to act as a heating source and/or to act as a cooling source of an existing metal hydride-based storage and compression system, for example, a system used for hydrogen storage. In an existing metal hydride-based storage and compression system, the thermal management system is used for example to heat the at least one unit including a hydrogen storage material for a hydrogen desorption process.

The thermal management system described below can be comprised in an existing metal hydride-based storage and compression system and/or in the automatic regeneration setup for metal hydride-based storage and compression system according to the present invention.

This means that a method for regeneration can be applied directly to an existing system, which saves costs and eliminates the need to disassemble an existing metal hydride-based storage and compression system. This means that the metal hydride-based storage and compression system can be regenerated more quickly and easily, saving time and allowing the metal hydride-based storage and compression system to be used as a storage system again more quickly.

According to certain embodiments, the automatic regeneration setup for metal hydride-based storage and compression system comprises a single thermal management system configured to act as a heating source and as a cooling source.

According to certain embodiments, the at least one thermal management system is at least one thermal medium management system configured to act as a heating source and as a cooling source, wherein the at least one thermal medium management system comprises a thermal medium.

By using a thermal medium, the step of heating and cooling in a method for regeneration can be carried out by means of a thermal medium management system. This allows optimal heat transfer and heat distribution within the hydrogen storage material, which makes the regeneration process more effective.

According to certain embodiments, if the automatic regeneration setup for metal hydride-based storage and compression system comprises a single thermal management system configured to act as a heating source and as a cooling source, the thermal management system can be a thermal medium management system comprising a thermal medium.

By using a thermal medium management system, only a single thermal management system is needed for cooling and heating. This saves costs and the automatic regeneration setup can be designed in a compact manner. Furthermore, since many existing metal hydride-based hydrogen storage and compression systems use a thermal fluid management system as a thermal management system, the automatic regeneration setup can be easily applied to an existing system without major modifications.

According to certain embodiments, the thermal medium management system further comprises a thermal medium circulation system, a thermal medium pump connected to the thermal medium circulation system configured to transport the thermal medium in the thermal medium circulation system and at least one thermal medium heat exchanger system connected to the thermal medium circulation system configured to heat and/or cool the thermal medium.

According to certain embodiments, the thermal medium circulation system interconnects the thermal medium pump and the thermal medium heat exchanger system.

According to certain embodiments, the thermal medium circulation system comprises at least one pipe and/or a least one valve. The at least one pipe and/or the at least one valve can interconnect a thermal medium inlet and thermal medium outlet. The thermal medium circulation system can be sealed so that the thermal medium is prevented from escaping the thermal medium circulation system.

According to certain embodiments the automatic regeneration setup for metal hydride-based storage and compression systems further comprises a housing.

According to certain embodiments, the housing of the automatic regeneration setup for metal hydride-based storage and compression systems comprises at least one inlet and at least one outlet configured to serve as the thermal medium inlet and thermal medium outlet.

According to certain embodiments, the thermal medium circulation system surrounds the at least one unit including a hydrogen storage material so that the thermal medium circulation system is in direct contact with the at least one unit including a hydrogen storage material, in particular with the casing of the at least one unit, in order to heat and cool the at least unit including a hydrogen storage material. In this case the thermal medium management system can heat or cool at least a part of the at least one unit including a hydrogen storage material.

According to certain embodiments, the type of surrounding the at least one unit including a hydrogen storage material is not particularly limited as long as the thermal medium circulation system is in direct contact with the at least unit including a hydrogen storage material.

According to certain embodiments, the at least one pipe comprised in the thermal medium circulation system surrounds the at least one unit including a hydrogen storage material so that the at least one pipe is in direct contact with the at least one unit including a hydrogen storage material, in particular with the casing of the at least one unit. The way the at least one pipe surrounds the at least one unit including a hydrogen storage material is not particularly limited. For example, the at least one pipe can be wrapped around the at least one unit. The at least one pipe can be connected to the thermal medium inlet and thermal medium outlet. The thermal medium can be transported from the thermal medium inlet to the thermal medium outlet by the at least one pipe. The thermal medium that is transported via the at least one pipe can be configured to cool and to heat the at least one unit including a hydrogen storage material.

According to certain embodiments, the thermal medium circulation system is configured in such a way that the thermal medium is in direct contact with the at least one unit including a hydrogen storage material. According to certain embodiments, a space within the housing is provided between the housing of the automatic regeneration setup for metal hydride-based storage and compression systems, the depressurizing system and the casing of the at least one unit including a hydrogen storage material. According to certain embodiments, the space between the housing of the automatic regeneration setup for metal hydride-based storage and compression systems, the depressurizing system and the casing of the at least one unit including a hydrogen storage material is filled with the thermal medium. According to certain embodiments, the thermal medium enters the space via the thermal medium inlet and releases the space via the thermal medium outlet. According to certain embodiments, the thermal medium management system can heat or cool at least a part of or the at least one unit including a hydrogen storage material.

According to certain embodiments, the housing of the automatic regeneration setup for metal hydride-based storage and compression systems, the depressurizing system and the casing of the at least one unit including a hydrogen storage material is sealed so that the thermal medium is prevented from entering the at least one unit, the depressurizing system and/or escaping the automatic regeneration setup.

According to certain embodiments the thermal medium inlet is provided on one end and one side of the housing of the automatic regeneration setup for metal hydride-based storage and compression systems, and the thermal medium outlet is provided at an opposite end and opposite side of the housing such that when a thermal medium is transported from the thermal medium inlet to the thermal medium outlet, the thermal medium flows around the outside of the casing of the at least one unit including a hydrogen storage material. The thermal medium can flow around and across the outside of the casing of the at least one unit, and can be configured to cool and to heat the at least one unit.

According to certain embodiments the thermal medium pump is not particularly limited as long as the thermal medium pump is able to pump the thermal medium. The thermal medium pump can be selected from the group consisting of centrifugal pump, a screw pump, a gear pump, a piston pump, a diaphragm pump, and a positive displacement pump, preferably a centrifugal pump. If the thermal medium is more viscous, a positive displacement pump can be used.

In the case that the thermal medium is air, the thermal medium pump can be replaced by a blower. In this case, the description with regard to the thermal medium pump applies to the blower. According to certain embodiments, the blower is not particularly limited as long as the blower is capable of transporting air. Further, in the case that the thermal medium is air, the thermal medium management system can be a forced air convection system.

According to certain embodiments, a thermal medium pump is connected to the thermal medium circulation system with at least one pipe and/or at least one valve. The thermal medium pump can be configured to transport the thermal medium in the thermal medium circulation system.

According to certain embodiments, the at least one thermal medium heat exchanger system comprises at least one heat exchanger, at least one pipe and/or at least one valve. The at least one heat exchanger can be connected to the thermal medium circulation system with at least one pipe and/or at least one valve. The at least one heat exchanger can be configured to cool and/or heat the thermal medium to a predetermined temperature. The at least one heat exchanger can comprise a cooling medium and/or a heating medium configured to perform a heat exchange with the thermal medium. If the thermal medium is to be cooled, the cooling medium can be used to cool the thermal medium. If the thermal medium is to be heated, the heating medium can be used to heat the thermal medium. The cooling medium can be the same as the heating medium.

According to certain embodiments the at least one thermal medium heat exchanger is not particularly limited as long as the at least one thermal medium heat exchanger is able to heat and/or cool the thermal medium.

According to certain embodiments, the at least one thermal medium heat exchanger system comprises at least two heat exchangers, wherein the first of the at least two heat exchangers is configured to cool the thermal medium to a predetermined temperature, wherein the second of the at least two heat exchangers is configured to heat the thermal medium to a predetermined temperature.

According to certain embodiments, the at least one thermal medium heat exchanger system comprises a single heat exchanger, wherein the heat exchanger is configured to cool the thermal medium to a predetermined temperature and to heat the thermal medium to a predetermined temperature.

According to certain embodiment the thermal medium heat exchanger system is a heat pump system.

According to certain embodiments the thermal medium management system is a circulatory system, wherein the thermal medium circulates in the thermal medium management system.

According to certain embodiments, the at least one thermal management system is configured to act as a cooling source and/or to act as a heating source, in particular as a cooling source and as a heating source, wherein the at least one thermal management system is configured to be heated to a temperature up to 450 °C, preferably a temperature in a range from -40°C to 400 °C, preferably from - 25 °C to 400 °C, more preferably from -10 °C to 350 °C. In the case, if the at least one thermal management system is configured to act as a heating source, the thermal management system can be configured to be heated to a temperature in a range from 110 °C to 450 °C, preferably from 160 °C to 430 °C, more preferably from 200 °C to 420°C, even more preferably from 250° to 400°C, and even more preferably from 250 °C to 350 °C. In the case, if the at least one thermal management system is configured to act as a cooling source, the thermal management system can be configured to be heated or rather cooled to a temperature in a range from -40 °C to 50 °C, preferably from -10 °C to 35 °C, more preferably from -20 °C to room temperature, even more preferably from 0 °C to room temperature. It is noted that the temperatures are the predetermined temperatures mentioned with regard to the heat exchanger system.

By using components that fulfil the above requirements, the automatic regeneration setup can be used reliably. If higher temperatures are applied, the wear on the components increases excessively, which is why the components have to be replaced more often, resulting in high costs.

According to certain embodiments, the thermal medium is selected from the group consisting of water, an organic compound, mixtures of water and an organic compound, thermal oil and air. The organic compound can be glycol.

Preferably, the thermal medium is selected from the group consisting of water, a water-glycol mixture, air, and silicone oil. The water and/or the water-glycol mixtures can be pressurized. The water-glycol mixture can include 20 vol.% to 50 vol.% water based on the total volume of the water-glycol mixture, depending on the predetermined temperature mentioned above.

If one of the above thermal mediums is used, the temperature of the hydrogen storage material or the at least one unit including a hydrogen storage material can be set particularly precisely in a method for regeneration.

According to certain embodiments, a first thermal medium is used for heating and a second thermal medium is used for cooling. According to certain embodiments the first thermal medium is the second thermal medium.

According to certain embodiments, the thermal medium is a thermal oil. According to certain embodiments, the thermal oil is not particularly limited as long as it is suitable to be used in the thermal medium management system. The thermal oil can be Malotherm or Duratherm. Preferably the thermal oil is selected from the group consisting of synthetic heat transfer oils based on high-performance aromatic hydrocarbons (eg: Marlotherm, Duratherm), and silicone-based oils. According to certain embodiments, silicone-based oil is preferred, and silicone oil is more preferred.

According to certain embodiments, the thermal medium is silicone oil. According to certain embodiments, a thermal oil can be the first thermal medium and/or the second thermal medium.

If a synthetic heat transfer oil based on high-performance aromatic hydrocarbons or a silicone-based oil, preferably silicone oil, is used, a single thermal oil can be used for heating and cooling in a method for regeneration, as these compounds are stable at high temperatures and low temperatures. This means that the thermal oil does not have to be exchanged between heating and cooling, which saves costs and time.

According to certain embodiments, in the case a different thermal medium is used for heating and cooling, the thermal medium used for heating can be released from the thermal management system using a valve and the thermal medium used for cooling can be introduced into the thermal management system using the same or another valve. After cooling, the thermal medium used for cooling can be released from the thermal management system using a valve and the thermal medium used for heating can be introduced into the thermal management system and vice versa.

According to certain embodiments, the at least one thermal management system configured to act as a heating source is an electrical heat.

According to certain embodiments, the electrical heat comprises at least one heating wire and a control unit connected to a power source and connected to the heating wire. According to certain embodiments, the control unit is configured to control the temperature of the heating wire. According to certain embodiments the heating wire is not particularly limited as long as the heating wire is configured to be capable of reaching a temperature up to 450 °C preferably, a temperature in a range from 110 °C to 400 °C, preferably from 160 °C to 400 °C, more preferably from 200 °C to 400°C, even more preferably from 250° to 400°C, and even more preferably from 250 °C to 350 °C.

By using an electrical heat that fulfil the above requirements, the automatic regeneration setup can be used reliably.

According to certain embodiments, the heating wire surrounds the at least one unit including a hydrogen storage material so that the heating wire is in direct contact with the at least one unit including a hydrogen storage material, in particular the casing of the at least one unit. The way the heating wire surrounds the at least one unit including a hydrogen storage material is not particularly limited as long as the heating wire is in direct contact with the at least unit including a hydrogen storage material. For example, the heating wire can be wrapped around the at least one unit. In this case the electrical heat can heat at least a part of the at least one unit including a hydrogen storage material.

According to certain embodiments, the heating wire can enter the housing of the automatic regeneration setup via a heating wire inlet and the heating wire can leave the housing of the automatic regeneration setup via a heating wire outlet. The heating wire can be configured to heat the at least one unit including a hydrogen storage material.

According to certain embodiments, the heating wire passes the at least one unit including a hydrogen storage material. In this case, the at least one unit including a hydrogen storage material has at least one inlet and one outlet through which the heating wire can enter and leave the at least one unit. The at least inlet and the at least on outlet can be sealed so that hydrogen and/or the hydrogen storage material is prevented from escaping the at least one unit. The heating wire can have a specific isolation material provided at the surface of the heating wire. The shape of how the heating wire passes through the at least one unit including a hydrogen storage material is not particularly limited as long as the heating wire is capable to heat the at least one unit including a hydrogen storage material to the predetermined temperature as described above. The heating wire can be configured to heat the at least one unit including a hydrogen storage material.

According to certain embodiments, the control unit controls the temperature of the heating wire by controlling the power supply of the power source.

According to certain embodiments, the automatic regeneration setup for metal hydride-based storage and compression systems comprises a first thermal management system being an electrical heat configured to act as a heating source and a second thermal management system being a thermal medium management system configured to act as a cooling source.

According to certain embodiments, the automatic regeneration setup for metal hydride-based storage and compression systems comprises a single thermal management system being an electrical heat configured to act as a heating source. In this case, the system can be left to cool down naturally. Thus, no additional thermal management system is required configured to act as a cooling source.

According to certain embodiments, the at least one thermal management system is configured to supply enough heat to counteract any heat losses in the automatic regeneration setup.

According to certain embodiments, the at least one thermal management system, in particular, the at least one thermal medium management system is configured to supply enough cold to counteract any cold losses in the automatic regeneration setup.

According to certain embodiments, the depressurizing system connected to the at least one unit including a hydrogen storage material configured to act as depressurizing source and to depressurize the at least one unit including a hydrogen storage material comprises a vacuum pump.

By using a vacuum pump, the pressure of the automatic regeneration setup for metal hydride-based storage and compression systems can be reduced in a method for regeneration, whereby the impurities can be effectively removed from the hydrogen storage material.

According to certain embodiments, the depressurizing system is capable of depressurizing the at least one unit including a hydrogen storage material to a pressure in the range of 5 bar to 10⁻⁷ mbar, preferably in the range of 5 bar to 0 mbar, more preferably in the range of 5 bar to 1 bar, even more preferably 1 bar. In certain embodiments, the pressure refers to the hydrogen pressure.

By using components that fulfil the above requirements, the automatic regeneration setup can be used reliably.

According to certain embodiments, the vacuum pump is not particularly limited as long as the vacuum pump is capable to depressurize the at least unit including a hydrogen storage material to the desired pressure. According to certain embodiments, the vacuum pump is selected from the group consisting of a rotary vane pump, a diaphragm pump, a piston pump, a turbomolecular pump, and a cryopump. The rotary vane pump, the diaphragm pump, and the piston pump can be capable to depressurize the at least one unit including a hydrogen storage material to a pressure or rather a vacuum up to fine/medium vacuum. According to certain embodiments, the vacuum pump is selected from the group consisting of a rotary vane pump, a diaphragm pump, and a piston pump, if the at least one unit including a hydrogen storage material is depressurized to a pressure up to 10⁻³ mbar. The cryopump can be capable to depressurize the at least one unit including a hydrogen storage material to a pressure or rather a vacuum up to high vacuum. A rotary vane pump, a diaphragm pump, a piston pump can be combined with a turbomolecular pump to be capable to depressurize the at least one unit including a hydrogen storage material to a pressure or rather a vacuum up to high vacuum. According to certain embodiments, the vacuum pump is selected from the group consisting of a combination of one of a rotary vane pump, a diaphragm pump, a piston pump with a turbomolecular pump, and a cryopump, if the at least one unit including a hydrogen storage material is depressurized to a vacuum in the range from 10⁻³ mbar to 10⁻⁷ mbar.

According to certain embodiments, the depressurizing system further comprises a depressurizing pipe system including at least one pipe and/or at least one valve. According to certain embodiments, the depressurizing pipe system including at least one pipe and/or at least one valve connects an inlet and an outlet of the depressurizing system, wherein at least one unit including a hydrogen storage material is arranged in between. The inlet and the outlet of the depressurizing system can be arranged in the housing of the automatic regeneration setup for metal hydride-based storage and compression systems. The inlet and the outlet can be the same component.

According to certain embodiments, the depressurizing system further includes a hydrogen supply and a hydrogen consumer. The connection between the hydrogen supply to the depressurizing system and/or between the hydrogen consumer to the depressurizing system can comprise at least one pipe and at least one valve. As such, the depressurizing system can be used for depressurizing the automatic regeneration setup during a regeneration method and can be used for storing and releasing of hydrogen during a hydrogen storage cycle of a metal hydride based storage and compression system during normal use, for example of an existing metal hydride based storage and compression system during normal use.

According to certain embodiments, the hydrogen supply is not particularly limited. The hydrogen supply can be selected from the group consisting of an electrolyzer, a hydrogen network connected with a pipe, a hydrogen trailer, and hydrogen cylinders. Further, the hydrogen can be hydrogen as byproduct from a previous process, hydrogen from fossil fuels, or hydrogen from biogas

According to certain embodiments, the hydrogen consumer is not particularly limited. The hydrogen consumer can be selected from the group consisting of a ship or a vehicle, for example, a truck, a bus, and a car.

According to certain embodiments, the vacuum pump comprised in the depressurizing system is joined via at least one pipe and at least one valve to a part of the depressurizing system, for example a part including the hydrogen supply and hydrogen consumer. According to certain embodiments, at least one valve, for example at least one three-way-valve, is used. If a method of regeneration is performed, the vacuum pump is connected to the depressurizing system, wherein the hydrogen supply and hydrogen consumer is disconnected from the depressurizing system using the at least one valve, for example the at least one three-way-valve. If a hydrogen storage cycle is performed, the vacuum pump is disconnected from the depressurizing system, wherein the hydrogen supply and hydrogen consumer is connected to the depressurizing system using the at least one valve, for example the at least one three-way-valve.

According to certain embodiments, the vacuum pump comprised in the depressurizing system is connected via at least one pipe and a T-fitting to the depressurizing system including the hydrogen supply and hydrogen consumer. In particular, the connection can be provided by at least on pipe connecting the vacuum pump to the T-fitting, wherein the at least one pipe can comprise at least one first valve, for example a two-way valve. The at least one first valve can be in an open position in the case of performing a method for regeneration of a metal hydride-based storage and compression system and can be in a closed position in the case of performing a hydrogen storage cycle. The at least one first valve can be in an open and closed position in the case of performing a method for regeneration of a metal hydride-based storage and compression system, that means the at least one first valve is opened at the beginning of the method and is closed during the method. In particular, the connection of the hydrogen supply and hydrogen consumer to the T-fitting can comprise at least one pipe and at least one second valve, for example a two-way valve. The at least one second valve can be in an closed position in the case of performing a method for regeneration of a metal hydride-based storage and compression system and can be in an open position in the case of performing a hydrogen storage cycle.

The depressurizing system is configured to depressurize the automatic regeneration setup for metal hydride-based storage and compression systems, in particular the at least one unit including a hydrogen storage material.

According to certain embodiments the depressurizing system can include a hydrogen management system of an existing metal hydride-based storage and compression system used for storing and releasing hydrogen. A hydrogen management system can be a system configured to perform the storage and releasing of hydrogen during a hydrogen storage cycle and can include at least one valve and/or at least one pipe connecting a hydrogen supply and a hydrogen consumer wherein at least one unit including a hydrogen storage material, which can be the same at least one unit used for the automatic regeneration setup according to the invention, is arranged in between. Such a hydrogen management system can be adapted by connecting a vacuum pump via at least one valve, for example a three way valve, or via T-fitting as described above to obtain a depressurizing system. In this case, all components of the depressurizing system that are already included in the hydrogen management system of the existing metal hydride-based storage and compression system, for example at least one pipe, at least one valve, a hydrogen supply and a hydrogen consumer, can be omitted.

As such, the adapted hydrogen management system can be used for depressurizing the metal hydride-based storage and compression system during a regeneration method and can be used for storing and releasing of hydrogen during a hydrogen storage cycle.

This means that a method for regeneration can be applied directly to an existing system, which saves costs and eliminates the need to disassemble an existing metal hydride-based storage and compression system. This means that the metal hydride-based storage and compression system can be regenerated more quickly and easily, saving time and allowing the metal hydride-based storage and compression system to be used as a storage system again more quickly.

According to certain embodiments, the automatic regeneration setup for metal hydride-based storage and compression system can be applied to an existing metal hydride-based storage and compression system as described above, or the automatic regeneration setup for metal hydride-based storage and compression system can serve as a metal hydride-based storage and compression system and an automatic regeneration setup, if the automatic regeneration setup for metal hydride-based storage and compression system is not applied to an existing metal hydride-based storage and compression system.

The depressurizing system can be sealed so that the hydrogen is prevented from escaping the system during a hydrogen storage cycle.

According to certain embodiments, the depressurizing system and/or the components of the adapted hydrogen management system that are depressurized are capable of being depressurized to the desired pressure.

According to certain embodiments, the automatic regeneration setup for metal hydride-based storage and compression systems can comprise a control system. According to certain embodiments, the control system can be configured to automatically start a method for regeneration of a metal hydride-based storage and compression system if a predetermined condition is fulfilled. The control system comprised in the automatic regeneration setup can serve to control the functions of the at least one thermal management system and/or the at least one depressurizing system and/or the least one unit including a hydrogen storage material.

According to certain embodiments, the control system can serve to control the functions of the at least one thermal management system.

According to certain embodiments, the control system can serve to control the functions of the thermal medium management system, for example, to control the flow of the thermal medium and the temperature of the thermal medium of the thermal medium management system of the automatic regeneration setup for metal hydride-based storage and compression systems according to the invention. Further, the control system can serve to control at least one valve of the thermal medium management system during a hydrogen storage cycle and/or a method for regeneration of a metal hydride-based storage and compression system, in particular, during a heating and/or a cooling step of the method. The control system can be connected to the components of the thermal medium management system via a suitable connection such as at least one wire to communicate, and/or at least one pipe including at least one valve. In particular, the control system can comprise, for example, a flow controller and/or a temperature measurement device such as a temperature sensor and/or a pressure measurement device such as a pressure sensor to determine, for example, the temperature and/or the flow and/or the pressure of the thermal medium. The control system can be configured to adjust, for example, the flow of the thermal medium and/or the temperature and/or the pressure of the thermal medium of the thermal medium management system.

According to certain embodiments, the control system serves to control the temperature of the at least one unit including a hydrogen storage material.

In particular, the control system can comprise, for example, a temperature measurement device such as a temperature sensor to determine, for example, the temperature of the at least one unit including a hydrogen storage material. The control system can be connected to the components of the at least one unit including a hydrogen storage material via a suitable connection such as at least one wire to communicate, and/or at least one pipe including at least one valve. The control system can be configured to adjust, for example, the flow of the thermal medium and/or the temperature of the thermal medium of the thermal medium management system or the temperature of the electrical heat in order to adjust the temperature of the at least one unit including a hydrogen storage material.

According to certain embodiments, the control system can serve to control the functions of the electrical heat, for example, to control the temperature of the at least one unit including a hydrogen storage material. In particular, the control system can be connected to the unit including a hydrogen storage material and the control unit of the electrical heating. The control system can be connected to the electrical via a suitable connection such as at least one wire to communicate. The control system can comprise a temperature measurement device such as a temperature sensor. The temperature control system can determine the temperature of the at least one unit including a hydrogen storage material. The control system can be configured to adjust the temperature of the electrical heat in order to adjust the temperature of the at least one unit including a hydrogen storage material.

According to certain embodiments, the control system can serve to control the functions of the depressurizing system, for example, to control the pressure or rather the vacuum of the automatic regeneration setup for metal hydride-based storage and compression systems. Further, the control system can serve to control at least one valve, for example the at least one first valve and the at least one second valve, of the depressurizing system in a method for regeneration of a metal hydride-based storage and compression system. The control system can be connected to the components of the depressurizing system via at least one wire to communicate, and/or at least one pipe including at least one valve. In particular, the control system can comprise, for example, at least one pressure measurement device such as a pressure sensor to determine the pressure or rather the vacuum of the automatic regeneration setup for metal hydride-based storage and compression systems, in particular the components configured to be depressurized such as the depressurizing system, and the at least one unit including a hydrogen storage material. The control system can be configured to adjust, for example, the pressure of the automatic regeneration setup for metal hydride-based storage and compression systems.

Further, the control system can serve to control the flow of the hydrogen and the pressure of the hydrogen in the depressurizing system. Further, the control system can serve to control at least one valve of the depressurizing system during a hydrogen storage cycle and/or a method for regeneration of a metal hydride-based storage and compression system, in particular, in a depressurizing step of the method. The control system can be connected to the components of the depressurizing system via a suitable connection such as at least one wire to communicate, and/or at least one pipe including at least one valve. In particular, the control system can comprise, for example, a flow controller and/or a pressure measurement device such as a pressure sensor to determine, for example, the flow of the hydrogen and the pressure of the hydrogen. The control system can be configured to adjust, for example, the flow of the hydrogen and/or the pressure of the depressurizing system.

According to certain embodiments, a plurality of pressure measurement devices can be installed at the components configured to be depressurized such as the depressurizing system, and the at least one unit including a hydrogen storage material. The plurality of measurement devices can be connected to the control system of the automatic regeneration setup.

According to certain embodiments, the predetermined condition is fulfilled if it is determined that a predetermined number of hydrogen storage cycles were performed, for example since the metal hydride-based hydrogen storage and compression system was installed or since the last method for regeneration of a metal hydride-based storage and compression system was performed, or if it is determined that a ratio of a total capacity of hydrogen of the hydrogen storage material included in the at least one unit after a plurality of hydrogen storage cycles to an initial total capacity of hydrogen of the hydrogen storage material included in the at least one unit is in a predetermined range, for example since the metal hydride-based hydrogen storage and compression system was installed or since the last method for regeneration of a metal hydride-based storage and compression system was performed.

According to certain embodiments, the control system of the automatic regeneration setup is configured to automatically start the regeneration cycle if a predetermined number of hydrogen storage cycles were performed. The number of hydrogen storage cycles can be, for example, in the range from 100 to 50 000 cycles, 250 to 30 000 cycles, preferably 750 to 20 000, more preferably 1050 to 10 000 cycles, more preferably 1650 to 3000 cycles, even more preferably 2000 cycles. The number of hydrogen cycles can depend on the used hydrogen material storage material.

According to certain embodiments, the control system is configured to count the number of hydrogen storage cycles of the at least one unit including a hydrogen storage material. According to certain embodiments, it is not particularly limited how the control system counts the number of hydrogen cycles. The control system can, for example, count a switching of a valve that is used to switch between a hydrogen desorption process of a hydrogen storage cycle and a hydrogen absorption process of a subsequent hydrogen storage cycle or vice versa in order to count the number of hydrogen storage cycles. Furthermore, the control system can, for example, use a flowmeter or pressure measurement device installed in the automatic regeneration setup for counting the number of hydrogen storage cycles.

According to certain embodiments, the control system of the automatic regeneration setup is configured to automatically start the regeneration cycle if a ratio of a total capacity of hydrogen of the hydrogen storage material included in the at least one unit after a plurality of hydrogen storage cycles to an initial total capacity of hydrogen of the hydrogen storage material included in the at least one unit is in a range of 0.1 to 0.9, preferably 0.5 to 0.9, more preferably 0.76 to 0.87, even more preferably 0.80 to 0.85.

The total capacity of hydrogen can refer to the total amount of hydrogen (weight in kg) stored in the hydrogen storage material included in the at least one unit at fixed pressure and temperature conditions after a plurality of hydrogen storage cycles were performed. The initial total capacity of the hydrogen storage material included in the at least one unit can be the total amount of hydrogen (weight in kg) stored in the hydrogen storage material included in the at least one unit in the first hydrogen storage cycle at fixed pressure and temperature conditions.

The total capacity of hydrogen can refer to the maximum pressure of hydrogen stored in the hydrogen storage material included in the at least one unit reached at the desorption temperature during a hydrogen desorption process in a hydrogen storage cycle after a plurality of hydrogen storage cycles were performed. The initial total capacity of the hydrogen storage material included in the at least one unit can be the maximum pressure of hydrogen stored in the hydrogen storage material included in the at least one unit reached at the desorption temperature during a hydrogen desorption process in the first hydrogen storage cycle.

The total capacity of hydrogen can refer to the minimum pressure of hydrogen stored in the hydrogen storage material included in the at least one unit reached at the absorption temperature during a hydrogen absorption process in a hydrogen storage cycle after a plurality of hydrogen storage cycles were performed. The initial total capacity of the hydrogen storage material included in the at least one unit can be the minimum pressure of hydrogen stored in the hydrogen storage material included in the at least one unit reached at the absorption temperature during a hydrogen absorption process in the first hydrogen storage cycle.

The first hydrogen storage cycle can be the first hydrogen storage cycle since the metal hydride-based hydrogen storage and compression system was installed or since the last method for regeneration of a metal hydride-based storage and compression system was performed.

According to certain embodiments, the control system is configured to determine the total capacity of hydrogen of the at least one unit including a hydrogen storage material. The control system can use, for example, a pressure measurement device such as a pressure sensor, and/or flow controller of the automatic regeneration setup for metal hydride-based storage and compression systems described above, for example of the depressurizing system and/or the at least one unit including a hydrogen storage material, in order to determine the total capacity of hydrogen of the at least one the hydrogen storage material included in the at least one unit. Preferably, the control system can use a flow controller and a pressure sensor in order to determine the total capacity of hydrogen of the at least one the hydrogen storage material included in the at least one unit.

The total capacity can be determined based on the amount of hydrogen stored in the hydrogen storage material included in the at least one unit by measuring the hydrogen flow over time, and for example at a specific temperature and pressure, using a flow controller during a hydrogen storage cycle, wherein the flow measured over time is integrated to determine the total capacity of hydrogen in the system, in particular of the hydrogen storage material included in the at least one unit including a hydrogen storage material.

Further, the total capacity can be determined based on the maximum or minimum pressure of hydrogen stored in the hydrogen storage material included in the at least one unit by measuring the pressure of hydrogen over time during a hydrogen desorption process or hydrogen absorption process, and for example at a specific temperature, using a pressure sensor during a hydrogen storage cycle. The maximum pressure of hydrogen can be preferably determined at the beginning and/or end of a hydrogen desorption process of a hydrogen storage cycle. The minimum pressure of hydrogen can be preferably determined at the beginning and/or end of a hydrogen absorption process of a hydrogen storage cycle.

The control system is able to start the process automatically, eliminating the need to start a method for regeneration manually, which saves time and costs. This makes a method for regeneration more effective.

The at least one valves that can be included in the automatic regeneration setup for metal hydride-based storage and compression systems can be selected from the group consisting of a pneumatic actuator, an electric actuator, or a solenoid actuator.

According to certain embodiments, a software module can be installed on the control system to manage the control of the respective components. According to certain embodiments, the components of the control system are interconnected so that the components can communicate with each other in order to adjust a specific parameter, such as temperature, flow and pressure.

If the automatic regeneration setup for metal hydride-based storage and compression system is applied to an existing metal hydride-based storage and compression system, the control system of the existing metal hydride-based storage and compression system can be used and can be adapted accordingly in order to be configured to start the method for regeneration automatically and to perform the functions described above.

In a preferred embodiment, an automatic regeneration setup for metal hydride-based storage and compression systems comprises more than one unit including a hydrogen storage material, one thermal management system, preferably one thermal medium management system, configured to act as a heating source and as a cooling source for at least a part of the at least one unit including a hydrogen storage material, a depressurizing system connected to each unit including a hydrogen storage material configured to act as depressurizing source and to depressurize each unit including a hydrogen storage material.

In a preferred embodiment, an automatic regeneration setup for metal hydride-based storage and compression systems comprises more than one unit including a hydrogen storage material, one thermal medium management system, configured to act as a heating source and as a cooling source for at least a part of the at least one unit including a hydrogen storage material, a depressurizing system connected to each unit including a hydrogen storage material configured to act as depressurizing source and to depressurize each unit including a hydrogen storage material, wherein the thermal medium management system comprises a thermal medium, preferably wherein the thermal medium is a thermal oil, preferably silicone oil.

In a second aspect, the present invention relates to a method for regeneration of a metal hydride-based storage and compression system, the method comprises the steps of: depressurizing at least one unit including a hydrogen storage material using a depressurizing system, heating the at least one unit including a hydrogen storage material using a first thermal management system, cooling the at least one unit including a hydrogen storage material using a second thermal management system.

Using such a regeneration method simplifies the regeneration of a metal hydride-based storage and compression system, wherein an automatic, safe, reliable and repeatable regeneration of a metal hydride-based storage and compression system can be performed.

Furthermore, such a method reduces the temperature for regeneration and no solvent is used. The removal of a solvent used for regeneration that is fed into the units is complex and it is difficult to remove the solvent without any residue.

Furthermore, the method can be applied to existing metal hydride-based storage and compression systems, as only a depressurizing system needs to be added. A thermal management system, parts of the depressurizing system, and a control system, which are described above, are available in existing metal hydride-based storage and compression systems, and can be used for such a method for regeneration. This means that the method for regeneration can be easily performed.

Furthermore, the hydrogen storage material can be regenerated by the regeneration process, in which the impurities are effectively removed from the hydrogen storage material.

For example, the capacity of the hydrogen storage material to store hydrogen can be increased after the hydrogen capacity has been reduced by impurities after a large number of hydrogen storage cycles.

This means that the metal hydride-based hydrogen storage and compression system has a longer lifetime and can be used more effectively.

According to certain embodiments, the automatic regeneration setup for metal hydride-based storage and compression systems according to the first aspect can be used for the method for regeneration of a metal hydride-based storage and compression system of the second aspect.

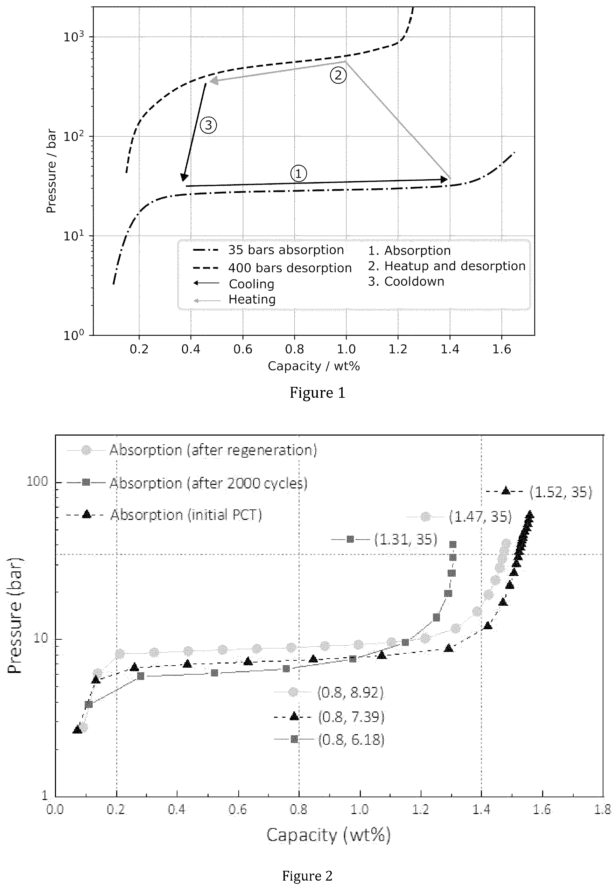

According to certain embodiments the method for regeneration is started when a hydrogen storage cycle is terminated, i.e. when a step of cooling is terminated, which is described with regard to FIG. 1 below.

The termination of a hydrogen storage cycle can be determined by the control system, preferably wherein the control system is the control system of the automatic regeneration set up as described above.

According to certain embodiments, the method for regeneration further comprises a step of determining a starting condition. The starting condition can be the predetermined condition as described with regard to the first aspect.

According to certain embodiments, the method for regeneration further comprises a step of determining that a starting condition is fulfilled.

This way, the automatic regeneration setup, in particular the control system, can determine when a method for regeneration should be started, eliminating the need to start it manually and making the method more effective.

According to certain embodiments, the method for regeneration further comprises a step of automatically starting the method for regeneration if a starting condition is fulfilled.

According to certain embodiments, the step of determining a starting condition and/or the step of determining that a starting condition is fulfilled and/or the step of automatically starting the method for regeneration is performed by a control system, preferably wherein the control system is the control system of the automatic regeneration set up as described above with regard to the first aspect.

When a method for regeneration is started automatically, the need to start it manually is eliminated and the method is more effective.

According to certain embodiments, the starting condition is fulfilled if it is determined that a predetermined number of hydrogen storage cycles were performed, for example since the metal hydride-based hydrogen storage and compression system was installed or since the last method for regeneration of a metal hydride-based storage and compression system was performed, or if it determined that a ratio of a total capacity of hydrogen of the hydrogen storage material included in the at least one unit after a plurality of hydrogen storage cycles to an initial total capacity of hydrogen of the hydrogen storage material included in the at least one unit is in a predetermined range, for example since the metal hydride-based hydrogen storage and compression system was installed or since the last method for regeneration of a metal hydride-based storage and compression system was performed.

According to certain embodiments, a starting condition to start the method for regeneration is fulfilled if the control system of the automatic regeneration setup determines that the metal hydride-based storage and compression system performed a predetermined number of hydrogen storage cycles. The number of hydrogen storage cycles can be, for example, in the range from 100 to 50 000 cycles, 250 to 30 000 cycles, preferably 750 to 20 000, more preferably 1050 to 10 000 cycles, more preferably 1650 to 3000 cycles, even more preferably 2000 cycles. The number of hydrogen cycles can depend on the used hydrogen material storage material. The counting can be performed by the control system as described above with regard to the first aspect.

When a method for regeneration is started automatically, the need to start it manually is eliminated and the method is more effective.

According to certain embodiments, a starting condition to start the method for regeneration is fulfilled if the control system of the regeneration determines that a ratio of a total capacity of hydrogen of the hydrogen storage material included in the at least one unit after a plurality of hydrogen storage cycles to an initial total capacity of hydrogen of the hydrogen storage material included in the at least one unit is in a range of 0.1 to 0.9, preferably 0.5 to 0.9, more preferably 0.76 to 0.87, even more preferably 0.80 to 0.85.

The total capacity of hydrogen can refer to the total amount of hydrogen (weight in kg) stored in the hydrogen storage material included in the at least one unit at fixed pressure and temperature conditions after a plurality of hydrogen storage cycles were performed. The initial total capacity of the hydrogen storage material included in the at least one unit can be the total amount of hydrogen (weight in kg) stored in the hydrogen storage material included in the at least one unit in the first hydrogen storage cycle at fixed pressure and temperature conditions.

The total capacity of hydrogen can refer to the maximum pressure of hydrogen stored in the hydrogen storage material included in the at least one unit reached at the desorption temperature during a hydrogen desorption process in a hydrogen storage cycle after a plurality of hydrogen storage cycles were performed. The initial total capacity of the hydrogen storage material included in the at least one unit can be the maximum pressure of hydrogen stored in the hydrogen storage material included in the at least one unit reached at the desorption temperature during a hydrogen desorption process in the first hydrogen storage cycle.

The total capacity of hydrogen can refer to the minimum pressure of hydrogen stored in the hydrogen storage material included in the at least one unit reached at the absorption temperature during a hydrogen absorption process in a hydrogen storage cycle after a plurality of hydrogen storage cycles were performed. The initial total capacity of the hydrogen storage material included in the at least one unit can be the minimum pressure of hydrogen stored in the hydrogen storage material included in the at least one unit reached at the absorption temperature during a hydrogen absorption process in the first hydrogen storage cycle.

The first hydrogen storage cycle can be the first hydrogen storage cycle since the metal hydride-based hydrogen storage and compression system was installed or since the last method for regeneration of a metal hydride-based storage and compression system was performed.

The determination of the total capacity can be performed by the control system as described above with regard to the first aspect.

When a method for regeneration is started automatically, the need to start it manually is eliminated and the method is more effective.

According to certain embodiments, the pressure of the at least one unit including a hydrogen storage material at the beginning of the method for regeneration is the pressure at the end of a hydrogen storage cycle. The pressure of the at least one unit including a hydrogen storage material at the beginning of the method for regeneration can be in a range of 15 bar to 55 bar, preferably 21 bar to 46 bar, more preferably 27 bar to 38 bar, even more preferably about 35 bar. In certain embodiments, the pressure refers to the hydrogen pressure. The pressure can be determined and controlled by the control system of the automatic regeneration setup.

According to certain embodiments, the step of depressurizing comprises a step of connecting a vacuum pump comprised in the depressurizing system via at least one valve, in particular a three-way-valve, to the depressurizing system and disconnecting a hydrogen supply and hydrogen consumer comprised in the depressurizing system via the at least one valve, in particular a three-way-valve to provide a closed system of the depressurizing system configured to be depressurized.

According to certain embodiments, the step of depressurizing comprises a step of connecting a vacuum pump comprised in the depressurizing system via at least one first valve, in particular a two-way-valve, to the depressurizing system by opening the at least one first valve and disconnecting a hydrogen supply and hydrogen consumer comprised in the depressurizing system via at least one second valve, in particular a two-way-valve, from the depressurizing system by closing the at least one second valve to provide a closed system of the depressurizing system configured to be depressurized.

According to certain embodiments, the vacuum pump included in the depressurizing system is used to depressurize the at least one unit including a hydrogen storage material.

According to certain embodiments, the step of automatically starting the method for regeneration is the step of connecting a vacuum pump comprised in the depressurizing to the depressurizing system if a starting condition is fulfilled.

According to certain embodiments, the depressurizing system including all components is the depressurizing system as described above with regard to the first aspect.

According to certain embodiments, during the step of depressurizing the at least unit including a hydrogen storage material, the pressure of the at least one unit including a hydrogen storage material at the beginning of the method for regeneration is reduced to the predetermined pressure after the step of depressurizing.

According to certain embodiments, the pressure, i.e. the predetermined pressure, of the at least one unit including a hydrogen storage material after depressurizing is in the range of 5 bar to 10⁻⁷ mbar, preferably in the range of 5 bar to 0 bar, more preferably in the range of 5 bar to 1 bar, even more preferably 1 bar. The pressure can be determined and controlled by the control system of the automatic regeneration setup. The pressure can refer to the hydrogen pressure.

When the method for regeneration is carried out at such a pressure, the impurities contained in the hydrogen storage material are effectively removed.

According to certain embodiments, before the at least one unit including a hydrogen storage material is heated in the heating step, the vacuum pump comprised in the depressurizing system is disconnected via at least one valve, in particular a three-way-valve, from the depressurizing system.

According to certain embodiments, before the at least one unit including a hydrogen storage material is heated in the heating step, the vacuum pump comprised in the depressurizing system is disconnected via at least one first valve, in particular a two-way-valve, from the depressurizing system by closing the at least one first valve.

According to certain embodiments, the at least one unit including a hydrogen storage material is heated in the heating step to a temperature in a range from 110 °C to 450 °C, preferably from 160 °C to 430 °C, more preferably from 200 °C to 420°C, even more preferably from 250° to 400°C, and even more preferably from 250 °C to 350 °C. The temperature can be determined and controlled by the control system of the automatic regeneration setup.

When the method for regeneration is carried out at such a temperature, the impurities contained in the hydrogen storage material are effectively removed.

Furthermore, at temperatures higher than the above temperatures, the stress on the materials used for an automatic regeneration setup, which was described with regard to the first aspect, can be too high, so that components of such a setup wear quickly and have to be replaced.

In addition, at temperatures higher than the above temperatures, the structure of the hydrogen storage material included in the at least unit can be altered, which leads to a deterioration of the hydrogen storage capacity.

According to certain embodiments, the first thermal management system can be a thermal management system as described above with regard to the first aspect. According to certain embodiments, the first thermal management system is a thermal medium management system or an electrical heat as described above with regard to the first aspect, preferably a thermal medium management system as described above with regard to the first aspect.

According to certain embodiments, after depressurizing and heating the at least one unit including a hydrogen storage material, the method further comprises a step of maintaining the at least one unit including a hydrogen storage material for in the depressurized and heated state 1 h to 30 h, preferably 16 h to 28 h, more preferably 22 h to 26 h.

According to certain embodiments, the at least one unit including a hydrogen storage material can be at least one unit including a hydrogen storage material as described above with regard to the first aspect.

When the method for regeneration is carried out for such a time, the impurities contained in the hydrogen storage material are effectively removed.

According to certain embodiments, the at least one unit including a hydrogen storage material is cooled in the cooling step to a temperature in a range from -40 °C to 50 °C, preferably from -10 °C to 35 °C, more preferably from 0 °C to room temperature , even more preferably room temperature. The temperature can be determined and controlled by the control system of the automatic regeneration setup.

According to certain embodiments, the second thermal management system is a thermal management system as described above. According to certain embodiments, the second thermal management system is a thermal medium management system as described above with regard to the first aspect. In the case of using an electrical heat, the second thermal management system can be omitted, and the automatic regeneration setup can be cooled naturally.

According to certain embodiments, the first thermal management system is the second thermal management system, preferably wherein the first thermal management system and the second thermal management system is a thermal medium management system.

According to certain embodiments, after the step of cooling, the method further comprises a step of disconnecting the vacuum pump from the depressurizing system by closing at least one first valve configured to connect the vacuum to the depressurizing system and by opening at least one second valve configured to connect the hydrogen supply and the hydrogen consumer to the depressurizing system. If the vacuum pump is disconnected from the depressurizing system before the heating step, this step is not required.

According to certain embodiments, the step of heating, the step of maintaining, and the step of cooling can be repeated for a required number of times. The required number of times can be selected so that a ratio of a total capacity of hydrogen of the hydrogen storage material included in the at least one unit after performing a method for regeneration of a metal hydride-based storage and compression system to a total capacity of hydrogen of the hydrogen storage material included in the at least one unit before performing a method for regeneration of a metal hydride-based storage and compression system fulfils a predetermined range, for example, a range of 0.9 to 1.0, preferably 0.92 to 0.98, more preferably 0.94 to 0.96, and more preferably 0.95. Preferably, the step of heating, the step of maintaining, and the step of cooling can be performed once.

According to certain embodiments, after the method of regeneration, at least one hydrogen storage cycle is performed.

In a preferred embodiment, a method for regeneration of a metal hydride-based storage and compression system is provided, the method comprises the steps of depressurizing at least one unit including a hydrogen storage material using a depressurizing system, heating the at least one unit including a hydrogen storage material and cooling the at least one unit including a hydrogen storage material, wherein a thermal medium management system is used for heating and cooling, preferably wherein the pressure of the at least one unit including a hydrogen storage material after depressurizing is 1 bar, preferably wherein the at least one unit including a hydrogen storage material is heated in the heating step to a temperature in a range from 250 °C to 350 °C, preferably wherein, after depressurizing and heating the at least one unit including a hydrogen storage material, the method further comprises a step of maintaining the at least one unit including a hydrogen storage material in the depressurized and heated state for 22 h to 26 h, preferably wherein the at least one unit including a hydrogen storage material is cooled in the cooling step to a temperature in the range of 0°C to room temperature.

In general, a metal hydride-based storage and compression system is configured to store and release hydrogen via a hydrogen storage material. Hydrogen storing comprises a hydrogen absorption process and hydrogen releasing comprises a hydrogen desorption process. A typical hydrogen storage cycle is described in the following with regard to FIG. 1. Such a hydrogen storage cycle can be performed by an existing metal hydride-based storage and compression system or by the automatic regeneration setup according to the invention.

In general, a hydrogen storage cycle can comprise the steps of absorption (1), heating up and desorption (2), and cooling down (3).

The step of absorption can be performed at nearly isobaric conditions, wherein the hydrogen is obtained from the hydrogen supply.

The pressure of hydrogen can range from 25 bar to 40 bar, preferably the pressure of hydrogen can be 35 bar. The pressure can be adjusted by the control system as described above with regard to the first aspect.

During the step of absorption, the at least unit including a hydrogen storage material can be cooled since the reaction of the hydrogen storage material with hydrogen is highly exothermic. The thermal management system, in particular the thermal medium management system included in an existing metal hydride-based storage and compression system or in the automatic regeneration setup for metal hydride-based storage and compression systems according to the present invention, described above with regard to the first aspect, can be used for cooling. The temperature of the thermal medium used for cooling the at least unit including a hydrogen storage material can be in the range from -25 °C to 20 °C, preferably in the range from -25 °C to -20 °C (absorption temperature). The temperature is adjusted by the control system as described above with regard to first aspect. The time of the step of absorption can range from 1 to 8 hours. During the step of absorption, the hydrogen storage material included in the at least one unit is reacted with the hydrogen to a metal hydride or metal alloy hydride. Hydrogen can then be stored as long as necessary in the at least one unit including a hydrogen storage material.

Upon demand for hydrogen, for example for refueling, the step of heating and desorption can be performed. The heating can be performed by the thermal management system described above, wherein the same thermal management system can be used for cooling and heating. The required hydrogen pressure of the hydrogen consumer determines the temperature to which the at least unit including a hydrogen storage material is to be heated (desorption temperature). The temperature can be adjusted by the control system as described above with regard to the first aspect. As such, the thermal medium if a thermal medium management system is used can be heated from the adsorption temperature to the desorption temperature, i.e. from -25 °C to 20 °C, preferably from -25 °C to -20 °C to about 110 °C to 150 °C, preferably 120 °C. An electrical heat can be used for heating instead of a thermal medium management system. For example, a temperature of about 120°C of the at least one unit including a hydrogen storage material or rather the hydrogen storage material is required to achieve a hydrogen desorption pressure of 370 bar for a given material. The pressure can be controlled and adjusted by the control system as described above with regard to the first aspect. During the step of heating and desorption, the hydrogen storage material present as a metal hydride or metal alloy hydride included in the at least one unit releases hydrogen to the hydrogen consumer and the hydrogen storage material is recovered. Usually, hydrogen is released until a pressure of about 35 bar is reached in the metal hydride-based storage and compression system.

The hydrogen storage cycle as described above can be repeated for a plurality of times.

According to certain embodiments, the hydrogen storage material is a material selected from the group consisting of a metal and a metal alloy. According to certain embodiments the metal includes Mg. According to certain embodiments the metal alloy is selected from the group consisting of an alloy of an AB-type, an alloy of an AB₂-type, and an alloy of an AB₅-type. According to certain embodiments the metal alloy is selected from the group consisting of an alloy of an AB₂-type, and an alloy of an AB₅-type. According to certain embodiments the hydrogen storage material is a metal alloy, preferably an alloy of an AB₂-type or an alloy of an AB₅-type.

According to certain embodiments, the alloy of an AB₂-type is represented by the following formula: LaₓCe_{y}Ml_{(1-x-y)}NiₐCo_{b}Fe_{c}M_{d}, in which x, y, a, b, c and d are molar ratios, where MI is at least one element selected from Y, Ti, Zr and M is selected from Cu and Mn; 0.15 ≤ x ≤ 0.95; 0.05 ≤ y ≤ 0.85; 0 ≤ (1-x-y) ≤ 0.1; 3.8 ≤ a ≤ 4.2; 0.1 ≤ b ≤1.2; 0.01 ≤ c ≤0.3; 0 ≤ d ≤ 0.1; 4.8 ≤ (a+b+c+d) ≤ 5.15.

According to certain embodiments, the alloy of an AB₅-type is represented by the following formula: TiₓZr_{y}CrₐMn_{b}Fe_{c}Ni_{d}CuₑV_{f}Re_{g}, in which x, y, a, b, c and d are molar ratios; Re is any one selected from La and Ce; 0.2 ≤ x ≤ 0.95; 0.05 ≤ y ≤ 0.45; 0.001 ≤ a ≤ 1; 0.3 ≤ b ≤2; 0.01 ≤ c ≤0.6; 0.005 ≤ d ≤ 1.5; 0 ≤ e ≤ 0.1; 0 ≤ f ≤ 0.5; 0.01 ≤ g ≤ 0.05; (a+b+c+d+e+f+g)/(x+y) = 1.9-2.35.

According to certain embodiments the hydrogen storage material is an alloy of an AB₅-type, in particular a La-Ni based AB₅-type alloy, a Ce-Ni based AB₅-type alloy, or a La-Ce-Ni based AB₅-type alloy.

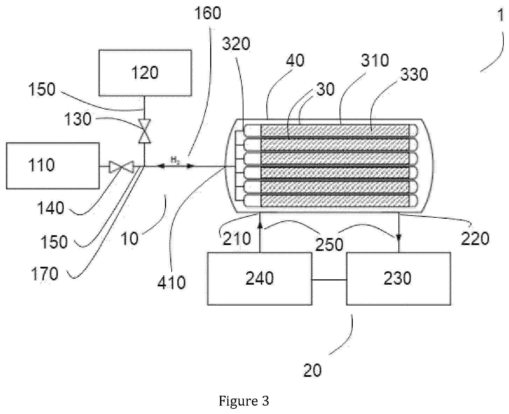

An exemplary embodiment of the automatic regeneration setup for metal hydride-based storage and compression systems is described with regard to FIG. 3.

The automatic regeneration setup for metal hydride-based storage and compression systems 1 comprises at least one unit including a hydrogen storage material 30, at least one thermal management system 20 configured to act as a heating source and/or to act as a cooling source for at least a part of the at least one unit including a hydrogen storage material 30, a depressurizing system 10 connected to the at least one unit including a hydrogen storage material 30 configured to act as depressurizing source and to depressurize the at least one unit including a hydrogen storage material 30.

In this embodiment, at least six units including a hydrogen storage material 30 arranged as a stack are shown, but the number is not limited. The depressurizing system 10 can interconnect each unit including a hydrogen storage material 30.

The at least one unit including a hydrogen storage material 30 can comprise a casing 310 and comprises the hydrogen storage material 330. The hydrogen storage material can be a La-Ni based AB₅-type alloy, a Ce-Ni based AB₅-type alloy, or a La-Ce-Ni based AB₅-type alloy in this embodiment.

Further, the at least one unit including a hydrogen storage material 30 can comprise at least one filter, that is not shown, configured to prevent the hydrogen storage material 330 to leave the at least one unit 30. The casing 310 can comprise at least one inlet 320 and at least one outlet 320 configured to be connected to the depressurizing system 10.

In this embodiment, the automatic regeneration setup for metal hydride-based storage and compression system 1 can comprise a single thermal management system 20 configured to act as a heating source and as a cooling source, wherein the thermal management system 20 can be a thermal medium management. As a thermal medium a thermal can be used, preferably silicone oil.

Thermal medium management system can further comprise a thermal medium circulation system 250, a thermal medium pump 240 connected to the thermal medium circulation system 250 configured to transport the thermal medium in the thermal medium circulation system 250 and at least one thermal medium heat exchanger system 230 connected to the thermal medium circulation system 250 configured to heat and/or cool the thermal medium. The thermal medium circulation system can interconnect the thermal medium pump 240 and the thermal medium heat exchanger system 250. The thermal medium circulation system 250 can comprises at least one pipe and/or a least one valve. The at least one pipe and/or the at least one valve can interconnect a thermal medium inlet 210 and thermal medium outlet 220.

The automatic regeneration setup for metal hydride-based storage and compression systems 1 can further comprise a housing 40.

The thermal medium circulation system 250 can surround the at least one unit including a hydrogen storage material 30 so that the thermal medium circulation system 250 is in direct contact with the at least one unit including a hydrogen storage material 30, in particular with the casing 310 of the at least one unit 30, in order to heat and cool the at least unit including a hydrogen storage material 30. In this case the thermal medium management system can heat or cool at least a part of the at least one unit including a hydrogen storage material 30.

The thermal medium pump 240 is not particularly limited. In this embodiment, the thermal medium pump 240 can be a centrifugal pump.

The at least one thermal medium heat exchanger system 230 can comprises at least one heat exchanger. The at least one heat exchanger can comprise a cooling medium and/or a heating medium configured to perform a heat exchange with the thermal medium. If the thermal medium is to be cooled, the cooling medium can be used to cool the thermal medium. If the thermal medium is to be heated, the heating medium can be used to heat the thermal medium.

The thermal medium management system can be a circulatory system, wherein the thermal medium can circulate in the thermal medium management system, which is shown by the arrows in FIG. 3.

The depressurizing system 10 connected to the at least one unit including a hydrogen storage material 30 configured to act as depressurizing source and to depressurize the at least one unit including a hydrogen storage material 30 comprises a vacuum pump 120. The vacuum pump 120 is not particularly limited, as long as the vacuum pump 120 is able to depressurize the automatic regeneration setup for metal hydride-based storage and compression systems 1.

The depressurizing system 10 can further comprise a depressurizing pipe system 160 including at least one pipe and/or at least one valve. The depressurizing pipe system160 including at least one pipe and/or at least one valve can connect an inlet 410 and an outlet 410 of the depressurizing system, wherein at least one unit including a hydrogen storage material 30 is arranged in between. The inlet 410 and the outlet 410 can be the same component.

The depressurizing system 10 can further include a hydrogen supply 110 and a hydrogen consumer 110. The connection between the hydrogen supply to the depressurizing system and/or between the hydrogen consumer to the depressurizing system can comprise at least one pipe 150 and at least one valve 140. The at least one valve 140 can include a pneumatic actuator, an electric actuator, or a solenoid actuator.

The vacuum pump 120 comprised in the depressurizing system 10 is connected via at least one pipe 150 and a T-fitting 170 to the depressurizing system 10 including the hydrogen supply 110 and hydrogen consumer 110. In particular, the connection can be provided by at least on pipe 150 connecting the vacuum pump 120 to the T-fitting 170, wherein the at least one pipe 150 can comprise at least one first valve 130, for example a two-way valve. The at least one valve 130 can include a pneumatic actuator, an electric actuator, or a solenoid actuator. The at least one first valve 130 can be in an open position in the case of performing a method for regeneration of a metal hydride-based storage and compression system and can be in a closed position in the case of performing a hydrogen storage cycle. In particular, the connection of the hydrogen supply and hydrogen 110 consumer to the T-fitting 170 can comprise at least one pipe 150 and at least one second valve 140, for example a two-way valve. The at least one second valve 140 can be in an closed position in the case of performing a method for regeneration of a metal hydride-based storage and compression system and can be in an open position in the case of performing a hydrogen storage cycle.

The automatic regeneration setup for metal hydride-based storage and compression systems 1 can further comprise a control system, which is not shown in FIG. 3. The control system can be configured to automatically start a method for regeneration of a metal hydride-based storage and compression system if a predetermined condition is fulfilled. The control system of the automatic regeneration setup 1 can be configured to automatically start the method for regeneration if a ratio of a total capacity of hydrogen of the hydrogen storage material 330 included in the at least one unit 30 after a plurality of hydrogen storage cycles to an initial total capacity of hydrogen of the hydrogen storage material 330 included in the at least one unit 30 is in a specific range, for example below 0.80 to 0.85, or if a predetermined number of hydrogen storage cycles, for example 2000, were performed since the metal hydride-based storage and compression system was installed or since the last method for regeneration of a metal hydride-based storage and compression system was performed.

The control system comprised in the automatic regeneration setup 1 can serve to control the functions of the at least one thermal management system 20 and/or the at least one depressurizing system 10 and/or the least one unit including a hydrogen storage material 30.

The control system can serve to control the valve 130 and the valve 140. The control system can control the temperature, the pressure and the flow of the thermal medium of the temperature management system 20 during a method for regeneration and/or a hydrogen storage cycle. The control system can control the pressure and the flow of hydrogen in the depressurizing system 10 during a method for regeneration and/or a hydrogen storage cycle. The control system can serve to control the temperature of the at least one unit including a hydrogen storage material 30 during a method for regeneration and/or a hydrogen storage cycle. The control system can serve to control the pressure or rather the vacuum of the depressurizing system 10 during a method for regeneration.

Further, an exemplary embodiment of a method for regeneration of a metal hydride-based storage and compression system is described with regard to FIG. 3.

The method for regeneration of a metal hydride-based storage and compression system can be automatically started if a predetermined condition is fulfilled, for example, if a ratio of a total capacity of hydrogen of the hydrogen storage material 330 included in the at least one unit 30 after a plurality of hydrogen storage cycles to an initial total capacity of hydrogen of the hydrogen storage material 330 included in the at least one unit 30 is in a specific range, for example 0.80 to 0.85, or if a predetermined number of hydrogen storage cycles, for example 2000, were performed since the metal hydride-based storage and compression system was installed or since the last method for regeneration of a metal hydride-based storage and compression system was performed.

When, the method for regeneration of a metal hydride-based storage and compression system is started, the sequence of repeating hydrogen storage cycles can be paused.

The thermal management system 20 that is used for the hydrogen desorption process of the hydrogen storage cycle before the method for regeneration of a metal hydride-based storage and compression system is started can be brought to ambient condition, for example to room temperature and normal pressure.

The at least one second valve 140 can be closed via the control system, in particular via a software installed on the control system.

The at least one first valve 130 can be opened via the control system, in particular via a software installed on the control system.

After the at least one first valve 130 is opened, the vacuum pump 120 can be started.

When the vacuum pump 120 is started, the step of depressurizing the at least unit including a hydrogen storage material 30 can be performed. The step of depressurizing the at least unit including a hydrogen storage material 30 can be performed until a predetermined pressure, for example 1 bar, of the at least one unit including a hydrogen storage material 30 is reached. After the predetermined pressure is reached, the vacuum pump can be switched off. The pressure can be determined and controlled by the control system, in particular via a software installed on the control system, of the automatic regeneration setup 1. The pressure can refer to the hydrogen pressure.

The at least one first valve 130 can be closed via the control system, in particular via a software installed on the control system.

The thermal management system 20 can heat the at least one unit including a hydrogen storage material 30 in the heating step to a temperature suitable for the regeneration, for example to a temperature in a range from 250 °C to 350 °C. The temperature can be determined and controlled by the control system, in particular via a software installed on the control system, of the automatic regeneration setup 1.

The, in the step of maintaining, the at least one unit including a hydrogen storage material 30 can be maintained in the depressurized and heated state for the required duration, for example, for 22 h to 26 h. The control system, in particular a software installed on the control system, can control the temperature, for example by controlling the thermal management system 20.

The thermal management system 20 can cool the at least one unit including a hydrogen storage material 30 in the cooling step to a temperature in a range from 0 °C to room temperature, preferably room temperature. The temperature can be determined and controlled by the control system, in particular via a software installed on the control system, of the automatic regeneration setup 1.

The heating step, the maintaining step, and the cooling step can be repeated for the required number of times. The required number of times can be selected so that a ratio of a total capacity of hydrogen of the hydrogen storage material included in the at least one unit after performing a method for regeneration of a metal hydride-based storage and compression system to a total capacity of hydrogen of the hydrogen storage material included in the at least one unit before performing a method for regeneration of a metal hydride-based storage and compression system fulfils a predetermined threshold, for example, 0.95. Preferably, these steps can be performed once.

The at least one first valve 140 can be opened via the control system, in particular via a software installed on the control system.

After the method of regeneration is performed, at least one hydrogen storage cycle can be performed, so that the metal hydride-based storage and compression system is in normal operation.

The above embodiments can be combined arbitrarily, if appropriate. Further possible embodiments and implementations of the invention comprise also combinations of features not explicitly mentioned in the foregoing or in the following with regard to the Examples of the invention. Particularly, a person skilled in the art will also add individual aspects as improvements or additions to the respective basic form of the invention.

### Examples

The present invention will now be described in detail with reference to several examples thereof. However, these examples are illustrative and do not limit the scope of the invention.

### Exemplary hydrogen storage cycle

In order to perform a hydrogen storage cycle, the following steps have been carried out: absorption, heating up and desorption, and cooling.

For the absorption the hydrogen pressure of the units including a hydrogen storage material was adjusted to 35 bar.

The units including the hydrogen storage material, in particular an metal alloy of an AB₅-type (La-Ni based AB₅-type alloy, a Ce-Ni based AB₅-type alloy, or a La-Ce-Ni based AB₅-type alloy) were cooled using a thermal medium management system to a temperature between -25 °C to - 20 °C (absorption temperature) by using silicone oil as a thermal medium. The time of the step of absorption was performed for 4 hours. During the step of absorption, the hydrogen storage material included in the at least one unit is reacted with the hydrogen to a metal hydride or metal alloy hydride.

The heating was performed by the same thermal medium management system as used for the cooling above or by an electrical heat. The units including the hydrogen storage material was heated to 120 °C (desorption temperature). As such the hydrogen desorption pressure was 370 bar. The hydrogen was released until a pressure of about 35 bar has been reached. During the step of heating and desorption, the hydrogen storage material present as a metal hydride or metal alloy hydride included in the at least one unit releases hydrogen to the hydrogen consumer and the hydrogen storage material is recovered.

After the desorption, the thermal medium is cooled from the desorption temperature to the absorption temperature using the same thermal medium management system as above. As such, the units including the hydrogen storage material are cooled to room temperature and the hydrogen storage cycle is finished and can be repeated if required. An exemplary hydrogen storage cycle is shown in FIG. 1.

### Exemplary method for regeneration of a metal hydride-based storage and compression system

A method for regeneration of a metal hydride-based storage and compression system was carried out after performing a plurality of hydrogen storage cycles as described above.

The method for regeneration was started when the previous hydrogen storage cycle is finished, i.e. when the step of cooling is finished. The control system of the automatic regeneration setup indicates when a method for regeneration should be started. The, the control system automatically starts the method.

The hydrogen storage material included in the at least one unit including a hydrogen storage material is a La-Ni based AB₅-type alloy, a Ce-Ni based AB₅-type alloy, or a La-Ce-Ni based AB₅-type alloy.

At first, the depressurizing system the vacuum pump comprised in the pressurizing system is connected via a first two-way-valve to the depressurizing system by opening the first two-way-valve and the hydrogen supply and hydrogen consumer comprised in the depressurizing system are disconnected via a second two-way-valve from the depressurizing system by closing the a second two-way-valve to provide a closed system of the depressurizing system configured to be depressurized.

After that the vacuum pump was started and the units were depressurized to a pressure of 1 bar. The initial pressure was 35 bar, which was the pressure after a hydrogen storage cycle.

After the depressurizing of the units including the hydrogen storage material was finished, the vacuum pump is disconnected by the at least one first valve from the depressurizing system.

After that, the units were heated to 300 °C using the thermal medium management system used for the hydrogen storage cycle or an electrical heat. As such, the thermal medium, silicone oil, was heated to the predetermined temperature.

After heating, the units are in a depressurized and heated state. This state was maintained for 24 h.

After that, the units were cooled to a range of 0°C to room temperature using the same thermal medium management system as used above.

The heating, maintaining and cooling can be repeated for a required number of times.

After said step, the method for regeneration was finished.

After the method of regeneration, at least one hydrogen storage cycle can be performed.

### Evaluation of the method for regeneration of a metal hydride-based storage and compression system

In order to evaluate the method for regeneration of a metal hydride-based storage and compression system, the total capacity of the hydrogen storage material included in the at least one unit including the hydrogen material were determined at the beginning (initial PCT), i.e. in the first hydrogen storage cycle, after 2000 hydrogen storage cycles and after a method for regeneration. The results are shown in FIG. 2. The total capacity of hydrogen refers to the total amount of hydrogen (weight in kg) comprised in the hydrogen storage material included in the at least one unit.

The total capacity was determined by measuring the total amount of hydrogen comprised in the hydrogen storage material included in the at least one unit at a certain pressure. The total amount can be determined by using for example a flow controller, such as a flowmeter included in the control system of the depressurizing system. The pressure can be measured by a pressure sensor included in the control system of the depressurizing system.

The hydrogen storage cycle as well as the method for regeneration of a metal hydride-based storage and compression system was carried out as described above.

As it is clear from FIG. 2, the total capacity of the units including the hydrogen storage material is reduced after 2000 hydrogen storage cycles compared to the initial total capacity. However, after the units were regenerated, the total capacity was improved and was at about the same level as the initial total capacity.

### LIST OF REFERENCE SIGNS

1 automatic regeneration setup for metal hydride-based storage and compression systems
10 depressurizing system
110 hydrogen supply/hydrogen consumer
120 vacuum pump
130 first valve
140 second valve
150 pipe
160 depressurizing pipe system
170 T-fitting
20 thermal management system
210 thermal medium inlet
220 thermal medium outlet
230 heat exchanger system
240 thermal medium pump
250 thermal medium circulation system
30 unit including a hydrogen storage material
310 casing
320 inlet/outlet
330 hydrogen storage material
40 housing
410 inlet/outlet

## Claims

1. Automatic regeneration setup for metal hydride-based storage and compression systems comprising:
at least one unit including a hydrogen storage material,
at least one thermal management system configured to act as a heating source and/or to act as a cooling source for at least a part of the at least one unit including a hydrogen storage material,
a depressurizing system connected to the at least one unit including a hydrogen storage material configured to act as depressurizing source and to depressurize the at least one unit including a hydrogen storage material.

2. The automatic regeneration setup for metal hydride-based storage and compression systems according to claim 1, wherein the at least one thermal management system is configured to be heated to a temperature up to 450 °C.

3. The automatic regeneration setup for metal hydride-based storage and compression systems according to any one of the preceding claims, wherein the at least one thermal management system is selected from the group consisting of a thermal medium management system configured to act as a heating source and/or to act as a cooling source, an electrical heat configured to act as a heating source, or a combination thereof.

4. The automatic regeneration setup for metal hydride-based storage and compression systems according to any one of the preceding claims, wherein the at least one thermal management system is at least one thermal medium management system configured to act as a heating source and as a cooling source, wherein the at least one thermal medium management system comprises a thermal medium.

5. The automatic regeneration setup for metal hydride-based storage and compression systems according to claim 4, wherein the thermal medium is selected from the group consisting of water, an organic compound, mixtures of water and an organic compound, thermal oil and air, optionally wherein the organic compound is glycol, optionally wherein the thermal oil is silicone oil, preferably wherein the thermal medium is selected from the group consisting of water, a water-glycol mixture, air and silicone oil.

6. The automatic regeneration setup for metal hydride-based storage and compression systems according to claim 3, wherein the electrical heat comprises at least one heating wire and a control unit connected to a power source and connected to the heating wire, wherein the heating wire surrounds the at least one unit including a hydrogen storage material so that the heating wire is in direct contact with the at least one unit including a hydrogen storage material.

7. The automatic regeneration setup for metal hydride-based storage and compression systems according to any one of the preceding claims, wherein the depressurizing system is capable of depressurizing the at least one unit including a hydrogen storage material to a pressure in the range of 5 bar to 10⁻⁷ mbar, preferably in the range of 5 bar to 0 bar, more preferably in the range of 5 bar to 1 bar, even more preferably 1 bar.

8. The automatic regeneration setup for metal hydride-based storage and compression systems according to any one of the preceding claims, wherein the automatic regeneration setup for metal hydride-based storage and compression systems further comprises a control system configured to start automatically a method for regeneration of a metal hydride-based storage and compression system if a predetermined condition is fulfilled.

9. The automatic regeneration setup for metal hydride-based storage and compression systems according to any of the preceding claims, wherein a ratio of the total capacity of hydrogen by weight of the hydrogen storage material included in the at least one unit including a hydrogen storage material to the total amount by weight of the hydrogen storage material included in the at least one unit including a hydrogen storage material is 0.001 to 0.05 preferably 0.003 to 0.037, more preferably 0.005 to 0.02.

10. A method for regeneration of a metal hydride-based storage and compression system, the method comprising the steps of:
depressurizing at least one unit including a hydrogen storage material using a depressurizing system,
heating the at least one unit including a hydrogen storage material using a first thermal management system,
cooling the at least one unit including a hydrogen storage material using a second thermal management system.

11. The method for regeneration of a metal hydride-based storage and compression system according to claim 10, wherein the pressure of the at least one unit including a hydrogen storage material after depressurizing is in the range of 5 bar to 10⁻⁷ mbar, preferably in the range of 5 bar to 0 bar, more preferably in the range of 5 bar to 1 bar, even more preferably 1 bar.

12. The method for regeneration of a metal hydride-based storage and compression system according to claim 10 or 11, wherein the at least one unit including a hydrogen storage material is heated in the heating step to a temperature in a range from 110 °C to 450 °C, preferably from 160 °C to 430 °C, more preferably from 200 °C to 420°C, even more preferably from 250° to 400°C, and even more preferably from 250 °C to 350 °C.

13. The method for regeneration of a metal hydride-based storage and compression system according to any one of claims 10 to 12, wherein, after depressurizing and heating the at least one unit including a hydrogen storage material, the method further comprises a step of maintaining the at least one unit including a hydrogen storage material in the depressurized and heated state for 1 h to 30 h, preferably 16 h to 28 h, preferably 22 h to 26 h.

14. The method for regeneration of a metal hydride-based storage and compression system according to any one of claims 10 to 13, wherein the at least one unit including a hydrogen storage material is cooled in the cooling step to a temperature in the range of -40 °C to 50 °C, preferably -10 °C to 35 °C, more preferably 0 °C to room temperature.

15. The method for regeneration of a metal hydride-based storage and compression system according to any one of claims 10 to 14, wherein the hydrogen storage material is a material selected from the group consisting of a metal and a metal alloy, preferably wherein the metal alloy is selected from the group consisting of an alloy of an AB₂-type, and an alloy of an AB₅-type.
